# EUROPÄISCHE PATENTSCHRIFT

(11) **EP 2 776 730 B1**
(45) Veröffentlichungstag und Bekanntmachung des Hinweises auf die Patenterteilung: **15.07.2015**
(21) Anmeldenummer: 12775675.7
(22) Anmeldetag: 19.10.2012
(51) Int. Cl.: F16D 48/06, F16D 21/06, F16D 21/04, F16D 23/04, F16D 21/00, F16D 23/06

(54) **MASCHINENSATZ**
MACHINE ASSEMBLY
GROUPE MOTEUR

(30) Priorität: 07.11.2011 DE 102011117766
(43) Veröffentlichungstag der Anmeldung: 17.09.2014
(73) Patentinhaber: Voith Patent GmbH, 89522 Heidenheim (DE)
(72) Erfinder: SCHABASSER, Martin, A-3123 Obritzberg (DE)
(74) Vertreter: Dr. Weitzel & Partner
(86) Internationale Anmeldenummer: PCT/EP2012/070744
(87) Internationale Veröffentlichungsnummer: WO 2013/068224

(56) Entgegenhaltungen:
- WO-A1-2012/100927
- DE-A1-102008 054 635
- DE-A1-102009 047 766
- FR-A- 1 397 266
- GB-A- 721 910
- US-A- 2 536 897
- US-A- 2 984 324

## Beschreibung

Die vorliegende Erfindung betrifft einen Maschinensatz mit einem Antrieb und einer Arbeitsmaschine.

Im Sinne der Erfindung kann der Antrieb dabei ein Verbrennungs- oder Elektromotor beziehungsweise eine Turbine wie Wasser- oder Gasturbine sein, wohingegen die Arbeitsmaschine ein Generator oder ein Kompressor ist. Dabei geht es um sehr hohe Leistungen, die in der Größenordnung von bis zu mehreren tausend Megawatt und darüber hinaus liegen. Aufgrund dieser extremen Leistungen weist der Maschinensatz auch außerordentlich hohe umlaufende Massen auf, die naturgemäß zu besonderen Problemen führen.

An einen gattungsgemäßen Maschinensatz sind höchste Anforderungen gesetzt. Zum einen muss die Arbeitsmaschine derart angefahren werden, sodass der Antrieb nicht überlastet wird. Zum anderen muss die Arbeitsmaschine auf eine solche Drehzahl hochgefahren werden, die gleich der Drehzahl des Antriebs ist. In anderen Worten müssen beide Maschinen synchron zueinander laufen.

Nach dem Erreichen des Synchronlaufs muss eine direkte mechanische Triebverbindung zwischen Antrieb und Arbeitsmaschine hergestellt werden. Eine solche Triebverbindung muss einerseits langlebig und somit niedrigem Verschleiß unterworfen sein und andererseits muss die Triebverbindung außerordentlich zuverlässig arbeiten, um auch bei einem Ausfall einiger Komponenten des Maschinensatzes ein Beschädigen oder gar Zerstören dieser Komponenten oder des ganzen Maschinensatzes sicher zu verhindern.

Obwohl die bekannten Maschinensätze verschiedener Hersteller als ausgereift und zuverlässig arbeitend gelten, erfüllen sie nicht alle diese Anforderungen in zufriedenstellender Weise.

Der Erfindung liegt daher die Aufgabe zugrunde, einen Maschinensatz mit einem Antrieb, einer Arbeitsmaschine und einem zwischen diese beiden geschaltetes Übertragungsglied vorzusehen, wobei der Maschinensatz für extrem hohe Leistungen und Drehzahlen ausgelegt ist, mit dem sich die Arbeitsmaschine zuverlässig und für den Antrieb schonend anfahren lässt, wobei der Antrieb und die Arbeitsmaschine auf synchrone Drehzahlen hochgefahren werden können. Dabei soll die Triebverbindung zwischen der Arbeitsmaschine und dem Antrieb bei geringstem Verschleiß stets zuverlässig arbeiten, um bei einem Ausfall einer Komponente des Maschinensatzes ein Beschädigen oder gar Zerstören desselben zu verhindern. Der Maschinensatz soll insbesondere einfacher und kostengünstiger gestaltet werden.

Der Erfinder hat dabei eine Lösung des Problems gefunden in Gestalt der Merkmale des Anspruchs 1.

US 2,984,324 offenbart einen Maschmensatz nach dem Oberbegriff des Anspruchs 1.

Die Arbeitsmaschine kann wie folgt angefahren werden:
1. Zunächst wird der Antrieb gestartet, die Arbeitsmaschine steht still.
2. Die kraftschlüssige Kupplung, welche als Reibkupplung ausgeführt ist, wird geschlossen.
3. Die Arbeitsmaschine wird vom Antrieb aufgrund der geschlossenen Reibkupplung hochgefahren, und zwar bis zum Erreichen des Synchronlaufs mit dem Antrieb.
4. Das Vorliegen des Synchronlaufs kann zusätzlich mittels Sensoren erfasst werden. Dies ist jedoch nicht zwingend notwendig.
5. Sodann wird die formschlüssige Kupplung geschaltet.

Gemäß einer Ausführungsform kann die formschlüssige Kupplung in Leistungsübertragungsrichtung gesehen parallel zu der kraftschlüssigen Kupplung schaltbar sein. Dabei kann nach Vorliegen des Synchronlaufes der An- und Abtriebswellen und dem Schalten der formschlüssigen Kupplung Drehmoment auf zwei Wegen vom Antrieb zur Arbeitsmaschine übertragen werden, und zwar einmal auf dem Wege über die kraftschlüssige Kupplung, und zum anderen auf dem Wege über die formschlüssige Kupplung. Die beiden Kraftflüsse verlaufen also parallel zueinander.

Die formschlüssige Kupplung dient in diesem Fall dann beispielsweise beim Ausfall der Betätigungskraft, welche die kraftschlüssige Kupplung in ihrer Geschlossen-Stellung hält, als Sicherung. Die formschlüssige Kupplung kann dabei leistungsmäßig derart ausgeführt sein, dass sie alleinig das gesamte Übertragungsmoment vom Antrieb auf die Arbeitsmaschine überträgt. Alternativ kann die kraftschlüssige Kupplung hinsichtlich ihrer übertragbaren Leistung derart ausgeführt sein, dass sie ein geringeres Drehmoment als die formschlüssige Kupplung, beispielsweise ein Leerlaufmoment der Arbeitsmaschine, überträgt. In diesem Fall wird die kraftschlüssige Kupplung lediglich zur Herstellung der Synchronität zwischen An- und Abtriebswelle herangezogen und kann, muss aber nicht zwingend hiernach geöffnet werden. Zum Öffnen der formschlüssigen Kupplung kann dann die kraftschlüssige Kupplung wieder geschlossen werden, um eventuell gegeneinander verklemmte Kupplungselemente der geschlossenen formschlüssigen Kupplung voneinander zu lösen. Nach dem Öffnen der formschlüssigen wird auch die kraftschlüssige Kupplung wieder geöffnet.

Als kraftschlüssige Kupplung wird eine schaltbare Reibkupplung wie Lamellenkupplung verwendet. Als (rein) formschlüssige, schaltbare Kupplung kann zum Beispiel eine Zahnkupplung oder Klauenkupplung eingesetzt werden. Beide Kupplungen können ebenfalls rein mechanische Kupplungen sein.

Die Erfindung soll nun anhand von den beigefügten Figuren erläutert werden.

Es zeigen:
- Figur 1: einen Maschinensatz in schematischer Darstellung gemäß einer nicht erfindungsgemäßen ersten Alternative;
- Fig. 2a u. 2b: einen Maschinensatz in schematischer Darstellung gemäß einer nicht erfindungsgemäßen zweiten Alternative;
- Figur 3: einen Maschinensatz in schematischer Darstellung gemäß einer erfindungsgemäßen dritten Alternative.

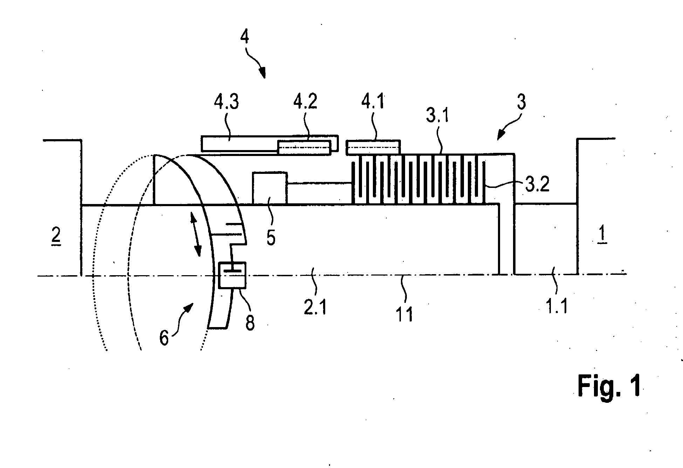

In Figur 1 ist in einer schematischen Darstellung ein Maschinensatz gemäß einer ersten Alternative in einem Halbschnitt durch dessen Drehachse 11 gezeigt. Der Maschinensatz umfasst dabei einen Antrieb 1, welcher eine Abtriebswelle 1.1 drehantreibt. Antriebswelle 1.1 läuft somit um die Drehachse 11 um.

Zur rein mechanischen Kopplung des Antriebs 1 mit einer Arbeitsmaschine 2 ist eine erste mechanische Kupplung, hier als kraftschlüssige Kupplung 3 bezeichnet, vorgesehen.

Zwischen dem Antrieb 1 und der kraftschlüssigen Kupplung 3 kann ein nicht gezeigtes Getriebe vorgesehen sein.

Kupplung 3 umfasst ein erstes Kupplungselement 3.1, welches drehstarr mit der Abtriebswelle 1.1 ausgeführt ist. Ein zweites Kupplungselement 3.2 ist mit einer Antriebswelle 2.1 der Arbeitsmaschine 2 drehstarr verbunden.

Bei geschlossener Kupplung 3 wird Drehmoment vom Antrieb 1 auf die Arbeitsmaschine 2 zu übertragen.

Zur Betätigung der Kupplung 3 ist dabei eine erste Einkuppeleinrichtung 5 vorgesehen, welche beispielsweise als mit Druckmedium betätigbare Kolben-Zylinder-Einheit ausgeführt ist und hier eine relative Axialbewegung der beiden Kuppelelemente 3.1, 3.2 zueinander durch Verschieben dieser ermöglicht, sodass beide Kuppelelemente 3.1, 3.2 miteinander in Verbindung bringbar sind.

Ferner ist eine zweite mechanische Kupplung, hier als formschlüssige Kupplung 4 bezeichnet, vorgesehen. Diese umfasst ein drittes Kupplungselement 4.1, welches zusammen mit der Abtriebswelle 1.1 umläuft, sowie ein viertes, mit der Antriebswelle 2.1 umlaufendes Kupplungselement 4.2.

Vorliegend wird das dritte Kupplungselement 4.1 von der kraftschlüssigen Kupplung 3, genauer gesagt von dessen erstem Kupplungselement 3.1 ausgebildet oder ist an ein solches angeschlossen. Die beiden Kupplungselemente 4.1, 4.2 können eine gerade oder schräge Verzahnung, insbesondere Außenverzahnung, aufweisen, und mit einem weiteren Kupplungselement 4.3 derart verbindbar sein, dass Drehmoment vom dritten Kupplungselement 4.1 auf das vierte Kupplungselement 4.2 übertragen wird. Dazu kann das weitere Kupplungselement 4.3, wie dargestellt, beispielsweise als komplementär verzahnte Schiebehülse mit Innenverzahnung ausgeführt sein. Beide Kupplungselemente 4.1, 4.2 können mittels einer zweiten Einkuppeleinrichtung 6, welche auf das weitere Kupplungselement 4.3 wirkt, miteinander in Verbindung gebracht werden.

Erste und zweite Kupplung 3, 4 sind somit vorliegend in Leistungsübertragungsrichtung vom Antrieb 1 zur Arbeitsmaschine 2 parallel zueinander angeordnet, sodass Drehmoment auf zwei Wegen, einerseits über die kraftschlüssige Kupplung 3 und andererseits über die formschlüssige Kupplung 4, übertragen werden kann.

Wie in Figur 1 durch den Doppelpfeil angedeutet, ist hier das zweite Kupplungselement 4.2 zusammen mit dem weiteren Kupplungselement, 4.3 um einen bestimmten Winkelbereich zu den verbleibenden Kupplungselementen 3.1, 4.1 relativ verdrehbar. Eine Relativverdrehung der beiden Kupplungselemente 4.2, 4.3 in Umfangsrichtung erfolgt hier mittels der zweiten Einkuppeleinrichtung 6. Hierzu ist diese als Servomotor 8, welcher beispielsweise elektrisch oder mittels eines Druckmediums betätigbar ist, ausgeführt.

Vorliegend erzeugt der Servomotor 8 eine in Umfangs- beziehungsweise Tangentialrichtung zur Drehachse 11 gesehen wirkende Verdrehkraft. Der besagte Winkelbereich kann relativ klein gewählt sein und somit das ein-, zwei-, drei-, vier- oder fünffache der Teilung der Verzahnung der jeweiligen Kupplungselemente 4.1, 4.2 oder darüber hinaus betragen.

Der zweiten Einkuppeleinrichtung 6 kann dabei eine mechanische Verdrehbegrenzung zugeordnet sein, um die freie Relativverdrehung der Kupplungselemente 4.2 und 4.3 gegenüber den Kupplungselementen 3.1 und 4.2 auf einen bestimmten Winkelbereich zu begrenzen. Fällt nun die erste Einkuppeleinrichtung 5 aus, sodass die Betätigungskraft, mittels welcher das Kupplungselement 3.1 gegen das Kupplungselement 3.2 gedrückt wird, abfällt, so werden die Kupplungselemente 4.2 und 4.3 beziehungsweise Antriebswelle 2.1 relativ zur Abtriebswelle 1.1 in Umfangsrichtung um den vorbestimmten Winkelbereich relativ zueinander verdreht. Dies erfolgt soweit, bis beide Kupplungselemente 4.2 und 4.3 aufgrund der Verdrehbegrenzung gegeneinander anschlagen. Damit wird Drehmoment ausschließlich durch die formschlüssige Kupplung 4 übertragen. Die Arbeitsmaschine 2 beziehungsweise der Antrieb 1 kann nun heruntergefahren werden, ohne dass ein Defekt des Maschinesatzes auftritt.

Das Ankuppeln der Antriebsmaschine 2 an den Antrieb 1 soll nun nachfolgend anhand einer bevorzugten Ausführungsform erläutert werden. Nach dem Starten des Antriebs 1 wird die kraftschlüssige Kupplung 3 geschlossen, sodass die Arbeitsmaschine 2 bis zum Erreichen des Synchronlaufs mit dem Antrieb 1 hochfährt. Beim Vorliegen des Synchronlaufs wird nun die formschlüssige Kupplung 4 geschlossen.

Dabei wird das vierte Kupplungselement 4.2 mittels der zweiten Einkuppeleinrichtung 6, hier mittels des Servomotors 8 so weit in Umfangsrichtung relativ zum dritten Kupplungselement 4.1 verdreht, sodass die Zähne der Innenverzahnung des weiteren Kupplungselements 4.3 auf die Lücken der Verzahnung des dritten Kupplungselements 4.1 treffen. Einkuppeleinrichtung 6 dient somit als Positioniervorrichtung, um den entsprechenden Zahn des Kupplungselements 4.2 auf die entsprechende Lücke des Kupplungselements 4.1 zu positionieren.

Ist dies der Fall, so wird hier mittels der zweiten Einkuppeleinrichtung 6 das weitere Kupplungselement 4.3 in Richtung auf das dritte Kupplungselement 4.1 axial verschoben, um Kupplungselemente 4.1 und 4.2 miteinander zu kuppeln. Nun sind beide Kupplungen 3, 4 geschlossen, sodass Drehmoment vom Antrieb 1 auf die Arbeitsmaschine 2 parallel über beide Kupplungen 3, 4 übertragen wird.

Der Servomotor 8 kann nun hinsichtlich der zu übertragenden Leistung derart dimensioniert sein, dass dieser nur zum Positionieren der beiden Kupplungselemente 4.2, 4.3 ausgelegt ist, sodass diese ohne Last verdreht werden können. In diesem Fall wird das gesamte Drehmoment von der kraftschlüssigen Kupplung 3 übertragen, der Servomotor 8 kann dann nach Erreichen der Synchrondrehzahl von An- und Abtriebswelle deaktiviert werden.

Bei Ausführung des Servomotors 8 als Hydraulikmotor wird dazu die Hydraulikversorgung zum Servomotor 8 drucklos geschaltet. Hierdurch wird die gesamte übertragbare Leistung alleinig von der kraftschlüssigen Kupplung 3 übertragen, wohingegen die formschlüssige Kupplung 4 lediglich als Sicherheit gegen einen Ausfall der kraftschlüssigen Kupplung 3 geschlossen mitläuft.

Der Formschluss der Kupplung 4 kann nur dann gelöst werden, wenn kein Drehmoment mehr von dem Antrieb 1 auf die Arbeitsmaschine 2 übertragen wird.

Alternativ kann der Servomotor 8 leistungsmäßig derart dimensioniert sein, dass das gesamte Drehmoment über die formschlüssige Kupplung 4 übertragen werden kann. In diesem Fall wird nach dem Ankoppeln der beiden Kupplungselemente 4.1 und 4.2 der formschlüssigen Kupplung 4 die kraftschlüssige Kupplung 3 geöffnet (hier durch Betätigen der ersten Einkuppeleinrichtung 5). Kupplungselemente 4.1, 4.2 können somit auch unter Last zueinander verdreht werden. In diesem Fall wird die zweite Einkuppeleinrichtung 6 nicht deaktiviert, sodass der Servomotor 8 weiterhin mit Hydraulikmedium beaufschlagt bleibt.

Um nun den Formschluss zwischen den beiden Kupplungselementen 4.1, 4.2 zu lösen und die formschlüssige Kupplung 4 zu öffnen, wird die kraftschlüssige Kupplung 3 zuerst geschlossen und die zweite Kupplung 4 durch Deaktivieren der zweiten Einkuppeleinrichtung 6 geöffnet. Da nun das gesamte Drehmoment wieder über die kraftschlüssige Kupplung 3 übertragen wird, kann das weitere Kupplungselement 4.3 relativ einfach in Axialrichtung von dem dritten Kupplungselement 4.1 entfernt werden.

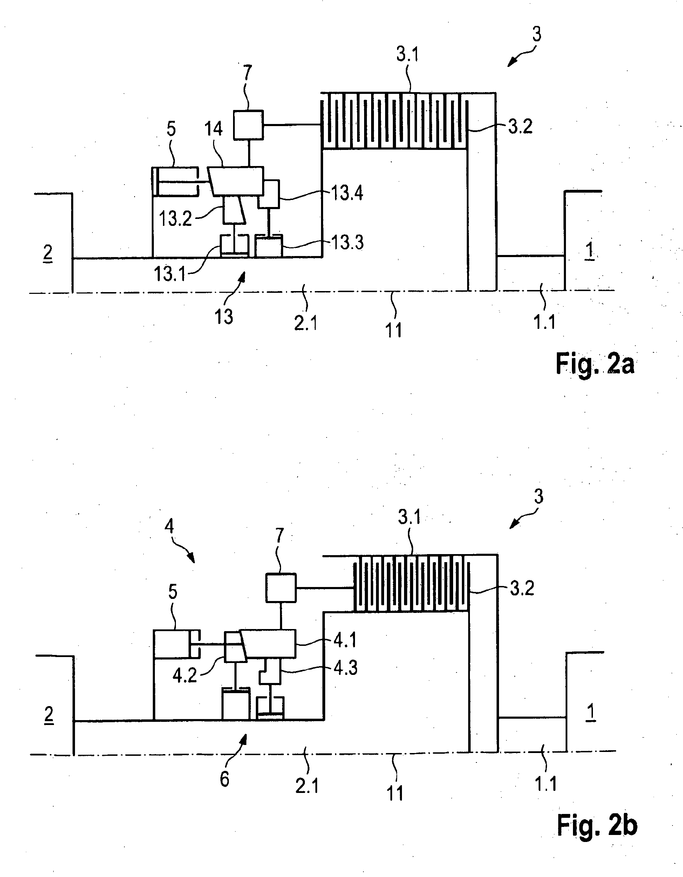

In den Figuren 2a und 2b ist eine schematische Darstellung eines Maschinensatzes gemäß einer Alternative jeweils in zwei Stellungen der kraftschlüssigen Kupplung 3 gezeigt. Figur 2a zeigt die kraftschlüssigen Kupplung 3 in einer Offenstellung, wohingegen die Figur 2b diese in ihrer Geschlossenstellung zeigt. Dabei sind, wie in Figur 1 dargestellt, sich entsprechende Elemente mit den entsprechenden Bezugszeichen versehen.

Gemäß dieser nicht erfindungsgemäßen Ausführungsform ist lediglich die kraftschlüssige Kupplung 3 vorgesehen, wobei hier die beiden Kupplungselemente 3.1, 3.2 zum Schließen der Kupplung 3 in Axialrichtung aufeinander zu und zum Öffnen dieser voneinander weg verschiebbar sind.

Der Kupplung 3 ist eine Arretiervorrichtung 13 zugeordnet. Letztere umfasst jeweils eine Kolben-Zylinder-Einheit 13.1, 13.3 an deren Kolbenende ein Klemmkörper 13.2, 13.4 mit dem Kolben hier in Radialrichtung der Kupplung 3 gesehen verschieblich angeordnet ist. Die Klemmkörper 13.2, 13.4 sind dabei derart ausgeführt, dass diese kraft- und/oder formschlüssig mit einem Zwischenkörper 14, welcher an dem Kupplungselement 3.1 angeordnet ist, lösbar verklemmbar sind.

Die Klemmkörper 13.2, 13.4 dienen dazu, um in mit dem Zwischenkörper 14 gekoppelten Zustand eine Bewegung des Kupplungselements 3.1 in Richtung auf die Offenstellung der Kupplung 3 und damit ein (ungewolltes) Lösen der beiden Kupplungshälften 3.1, 3.2 der Kupplung 3 aus einer Geschlossenstellung zu verhindern, wie dies noch nachher näher erläutert wird.

Wie in den Figuren 2a und 2b dargestellt, sind die Klemmkörper 13.2, 13.4 jeweils separat mittels der entsprechenden Kolben-Zylinder-Einheit 13.1, 13.3 betätigbar. Dabei weist der Klemmkörper 13.2 eine solche Kupplungsfläche auf, die mit einer komplementären Kupplungsfläche des Zwischenkörpers 14 einen Reibschluss bildet. Die zueinander komplementären Kupplungsflächen können kegel- oder keilförmig ausgebildet sein. Die Steigung dieser Flächen wie auch die Reibwerte können unter Berücksichtigung der Fliehkraft entsprechend aufeinander abgestimmt sein, dass sie ein Haltemoment zum Arretieren der Kupplung 3 liefern. Im vorliegenden Fall sind Zwischenkörper 14 und Klemmkörper 13.2 an ihren einander zugewandten Stirnseiten keilförmig ausgeführt. Selbstverständlich wäre auch eine derartige Ausführung denkbar, dass beide einen Formschluss miteinander bilden.

Der Klemmkörper 13.4 weist vorliegend einen im Wesentlichen L-förmigen Querschnitt auf und dient dazu, zusammen mit dem Zwischenkörper 14 einen Formschluss einzugehen.

In der Offenstellung der kraftschlüssigen Kupplung 3 (Figur 2a) ist die erste Einkuppeleinrichtung 5 unbetätigt. Zusätzlich ist die Kolben-Zylinder-Einheit 13.3 derart betätigt, dass das Klemmelement 13.4 einen Formschluss mit dem Zwischenkörper 14 eingeht. Durch diesen Formschluss wird verhindert, dass die kraftschlüssige Kupplung 3 versehentlich aktiviert wird. Dies geschieht dadurch, dass der Kolben der Kolben-Zylinder-Einheit 13.3 in Axialrichtung von dem radial eingebrachten Klemmelement 13.4 blockiert wird. Das Klemmelement 13.2 befindet sich hingegen in seiner eingezogenen Stellung, in der es von der stirnseitigen Kupplungsfläche des Zwischenkörpers 14 gelöst ist.

Beim Aktivieren der Kupplung 3, hier durch Betätigen des Kolbens der ersten Einkuppeleinrichtung 5, wird das zweite Kupplungselement 3.2 auf das erste Kupplungselement 3.1 axial verschoben, sodass Abtriebswelle 1.1 und Antriebswelle 2.1 miteinander gekoppelt sind. Davor wird die Kolben-Zylinder-Einheit 13.3 drucklos gemacht, worauf das Klemmelement 13.4 in Radialrichtung nach innen fährt und damit ein Verschieben des Kolbens der ersten Einkuppeleinrichtung 5 ermöglicht.

Bei geschlossener erster mechanischer Kupplung 3 wird anschließend Kolben-Zylinder-Einheit 13.1 betätigt, um das Klemmelement 13.2 mit dem Zwischenkörper 14 zu verspannen und damit den Kolben der Einkuppeleinrichtung 5 zu arretieren. Die Klemmelemente 13.2, 13.4 verhindern in ihrer Geschlossenstellung wiederum, dass bei einem Ausfall der ersten Einkuppeleinrichtung 5 die erste Kupplung 3 durch Zurückschnellen des Kolbens geöffnet wird.

Um ein unbeabsichtigtes Lösen des Klemmelements 13.2 vom Zwischenkörper 14 zu verhindern, werden die Reibwerte der beiden Kuppelflächen derart gewählt, dass die zwischen ihnen auftretende Reibkraft größer oder gleich der Betätigungskraft der ersten Einkuppeleinrichtung 5 ist.

Vorliegend ist dem Kupplungselement 3.2 in Kraftrichtung gesehen von der ersten Einkuppeleinrichtung 5 zur kraftschlüssigen Kupplung 3 eine Vorspanneinrichtung 7 nachgeschaltet. Diese wird bevorzugt dann eingesetzt, wenn die kraftschlüssige Kupplung 3 als Lamellenkupplung ausgeführt ist. In diesem Fall weisen die Lamellen eine sehr hohe axiale Steifigkeit auf. Durch die hohe axiale Steifigkeit verhält sich der Kolbenhub der ersten Einkuppeleinrichtung 5 nicht proportional zu dem von der Lamellenkupplung übertragbaren Moment. In anderen Worten bedeutet dies, dass sehr kleine Hübe des Kolbens der Einkuppeleinrichtung 5 große Veränderungen des übertragbaren Moments bewirken.

Gemäß einer Alternative wird die hohe axiale Steifigkeit durch eine Vorspannung der Lamellenkupplung mittels der Vorspanneinrichtung 7 kompensiert. Eine Entlastung der ersten Einkuppeleinrichtung 5 zieht damit auch keine Reduzierung des von der Lamellenkupplung übertragbaren Momentes nach sich. Die Vorspanneinrichtung 7 dient auch dazu, eventuell auftretende Wärmedehnungen in der Lamellenkupplung, die sonst eine Reduktion oder Überhöhung der Anpresskraft und damit eine Änderung des mit der Kupplung 3 übertragbaren Moments nach sich ziehen würden, auszugleichen.

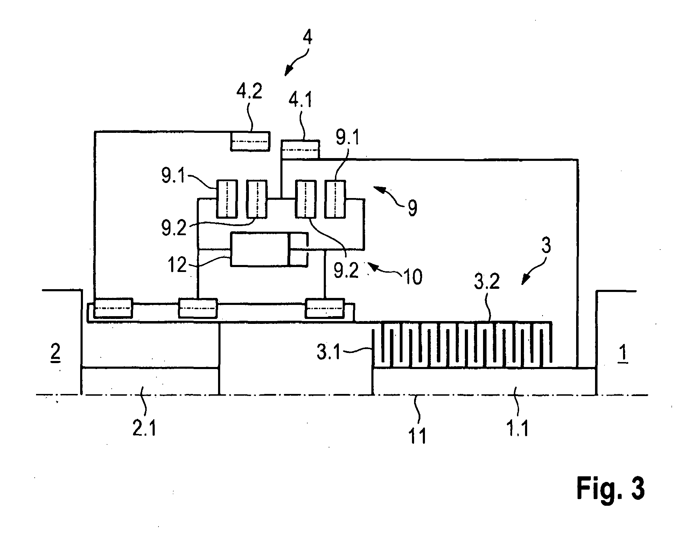

In Figur 3 ist in einer schematischen Darstellung eine dritte Alternative des erfindungsgemäßen Maschinensatzes gezeigt. Wiederum sind sich entsprechende Bauteile mit entsprechenden Bezugszeichen versehen.

Im vorliegenden Fall weist das vierte Kupplungselement 4.2 eine Innenverzahnung auf, um mit einer komplementär ausgebildeten Außenverzahnung des dritten Kupplungselements 4.1 formschlüssig gekoppelt zu werden. Zur axialen Verschiebung des vierten Kupplungselements 4.2 ist dieses relativ zur Abtriebswelle 1.1 auf dem zweiten Kupplungselement 3.2 axial verschieblich gelagert und ist über eine nicht dargestellte zweite Einkuppeleinrichtung hier in Axialrichtung mit dem vierten Kupplungselement 4.2 koppelbar.

Gemäß einer weiteren Ausführungsform ist eine zusätzliche formschlüssige Kupplung 9 vorgesehen, umfassend jeweils ein Paar fünfter Kupplungselemente 9.1 sowie ein Paar sechster Kupplungselemente 9.2. Letztere sind vorliegend starr mit dem dritten Kupplungselement 4.1 der formschlüssigen Kupplung 4 verbunden oder einteilig mit diesem ausgeführt.

Das Paar fünfter Kupplungselemente 9.1 ist über eine dritte Einkuppeleinrichtung 10 in Verbindung mit den beiden Kupplungselementen 9.2 bringbar, um die Abtriebswelle 1.1 und die Antriebswelle 2.1 drehfest miteinander zu koppeln. Die zusätzliche formschlüssige Kupplung 9 ist somit ebenfalls parallel zu den beiden anderen Kupplungen 3, 4 angeordnet.

Die Kupplungsflächen der paarweise angeordneten Kupplungselemente 9.1 und 9.2 stehen sich einander gegenüber und bilden hier zueinander komplementäre Stirnverzahnungen aus, die miteinander in (ausschließlich) formschlüssigen Eingriff bringbar sind. Die Teilung der Stirnverzahnung kann dabei ein Mehrfaches der Teilung der Verzahnung zwischen den beiden Kupplungselementen 4.1, 4.2 betragen.

Die dritte Einkuppeleinrichtung 10 weist einen bevorzugt elektrisch oder hydraulisch betätigbaren Servomotor 12 auf, der beispielsweise auch als Kolben-Zylinder-Einheit ausgeführt sein kann. Dabei ist jeweils eines der fünften Kupplungselemente 9.1 an den Zylinder und das andere an den Kolben angeschlossen, um bei einer Druckbeaufschlagung des Servomotors 12 eine gleichzeitige Kopplung beider Kupplungselemente 9.1 mit den komplementären Kupplungselementen 9.2 herzustellen und diese Kopplung beim Deaktivieren des Servomotors 12 gleichzeitig zu lösen. Beide Kupplungselemente 9.1 sind hier wiederum wie das vierte Kupplungselement 4.2 relativ zu Abtriebswelle 1.1 auf dem zweiten Kupplungselement 3.2 verschieblich gelagert.

Nach dem Erreichen des Synchronlaufes von Abtriebswelle 1.1 und Antriebswelle 2.1 bei geschlossener kraftschlüssiger Kupplung 3 wird zur relativen Lageeinstellung der dritten und vierten Kupplungshälfte 4.1 der formschlüssigen Kupplung 4 die zusätzliche formschlüssige Kupplung 9 durch Betätigen der dritten Einkuppeleinrichtung 10 geschlossen. Bei Einrasten der Stirnverzahnungen der Kupplungselemente 9.1 und 9.2 können diese beispielsweise um wenigstens eine Teilung der Stirnverzahnung relativ in Umfangsrichtung zueinander verdreht werden.

Mit dieser relativ kleinen Verdrehung in Umfangsrichtung können nun Lagefehler der dritten und vierten Kupplungselemente 4.1, 4.2 ausgeglichen werden. Dies geschieht dadurch, dass hier das dritte Kupplungselement 4.1 durch den Einkuppelvorgang ebenfalls relativverdreht wird, sodass letztere beim anschließenden Schließen der formschlüssigen Kupplung 4 nahezu axialkraftfrei miteinander gekoppelt werden können.

### Bezugszeichenliste

1 Antrieb
1.1 Abtriebswelle
2 Arbeitsmaschine
2.1 Antriebswelle
3 erste Kupplung
3.1 erstes Kupplungselement
3.2 zweites Kupplungselement
4 zweite Kupplung
4.1 drittes Kupplungselement
4.2 viertes Kupplungselement
4.3 weiteres Kupplungselement
5 erste Einkuppeleinrichtung
6 zweite Einkuppeleinrichtung
7 Vorspanneinrichtung
8 Servomotor
9 dritte Kupplung
9.1 fünftes Kupplungselement
9.2 sechstes Kupplungselement
10 dritte Einkuppeleinrichtung
11 Drehachse
12 Servomotor
13 Arretiervorrichtung
13.1, 13.3 Kolben-Zylinder-Einheit
13.2, 13.4 Klemmelement
14 Zwischenkörper

## Patentansprüche

1. Maschinensatz
1.1 mit einem Antrieb (1), umfassend eine Abtriebswelle (1.1);
1.2 mit einer Arbeitsmaschine (2), die eine Antriebswelle (2.1) aufweist;
1.3 mit einer zwischen Antrieb (1) und Arbeitsmaschine (2) geschalteten Kupplungseinheit, umfassend eine kraftschlüssige Kupplung (3) und eine formschlüssige Kupplung (4);
1.4 die Kupplungseinheit umfasst eine zusätzliche formschlüssige Kupplung (9);
1.5 mit einem Schalter, der beim Erreichen einer Soll-Drehzahl oder eines bestimmten Übertragungsdrehmoments von der kraftschlüssigen Kupplung (3) über die zusätzliche formschlüssige Kupplung (9) zur formschlüssige Kupplung (4) umschaltet; wobei
1.6 die kraftschlüssige Kupplung (3) ein erstes und zweites Kupplungselement (3.1, 3.2) umfasst, die wahlweise über eine erste Einkuppeleinrichtung (5) miteinander in Triebverbindung bringbar sind, und wobei
1.7 die formschlüssige Kupplung (4) ein drittes und viertes Kupplungselement (4.1, 4.2) umfasst, die wahlweise über eine zweite Enkuppeleinrichtung (6) miteinander in Triebverbindung bringbar sind, um die Antriebswelle (2.1) und die Abtriebswelle (1.1) drehfest miteinander zu koppeln, und die erste mechanische Kupplung (3) das dritte Kupplungselement (4.1) ausbildet oder an ein solches angeschlossen ist; **gekennzeichnet durch** die folgenden Merkmale:
1.8 die zusätzliche formschlüssige Kupplung (9) umfasst ein fünftes und sechstes Kupplungselement (9.1, 9.2), welche wahlweise über eine dritte Enkuppeleinrichtung (10) miteinander kraft- und/oder formschlüssig in Verbindung bringbar sind, derart, dass die Abtriebswelle (2.1) und die Antriebswelle (1.1) drehfest miteinander koppelbar sind.

2. Maschinensatz gemäß Anspruch 1, **dadurch gekennzeichnet, dass** das fünfte und sechste Kupplungselement (9.1, 9.2) gemeinsam axial relativ gegeneinander verschiebbar sind und gemeinsam mit dem zweiten Kupplungselement (3.2) oder der Abtriebswelle (2.1) kraft- und/oder formschlüssig in Eingriff bringbar sind.

3. Maschinensatz gemäß einem der Ansprüche 1 oder 2, **dadurch gekennzeichnet, dass** das fünfte Kupplungselement (9.1) und sechste Kupplungselement (9.2) zueinander komplementäre Stirnverzahnungen aufweisen, die miteinander in Eingriff bringbar sind; und
3.1 das sechste Kupplungselement (9.2) von dem zweiten Kupplungselement (3.2) ausgebildet wird oder an ein solches angeschlossen ist.

4. Maschinensatz gemäß einem der Ansprüche 1 bis 3, **dadurch gekennzeichnet, dass** das fünfte und sechste Kupplungselement (9.1, 9.2) axial relativ zum ersten Kupplungselement (3.1) oder zur Abtriebswelle (1.1) gelagert und entlang dieser verschiebbar ist.

5. Maschinensatz gemäß einem der Ansprüche 1 bis 4, **dadurch gekennzeichnet, dass** das erste Kupplungselement (3.1) eine gerade oder schräge Verzahnung aufweist, die mit einer komplementär ausgebildeten Verzahnung des dritten Kupplungselements (4.1) kämmt.

6. Maschinensatz gemäß einem der Ansprüche 1 bis 5, **dadurch gekennzeichnet, dass** die kraftschlüssige Kupplung (3) zum Übertragen eines kleineren Drehmoments, und die formschlüssige Kupplung (4) zum Übertragen eines höheren Drehmoments ausgelegt ist; oder
6.1 die formschlüssige Kupplung (4) leistungsmäßig derart ausgelegt ist, dass sie im Wesentlichen dasselbe Drehmoment wie die kraftschlüssige Kupplung (3) überträgt.

## Claims

1. Machine assembly
1.1 having a drive unit (1), including an output shaft (1.1);
1.2 with a working machine (2), which has a drive shaft (2.1);
1.3 having a coupling unit connected between the drive unit (1) and the working machine (2), comprising a non-positive coupling (3) and a positive coupling (4);
1.4 the coupling unit comprises an additional positive coupling (9);
1.5 having a switch, which switches from the non-positive coupling (3) via the additional positive coupling (9) to the positive coupling (4) when a target rotational speed or a specific transmitted torque has been achieved;
1.6 the non-positive coupling (3) comprises a first and second coupling element (3.1, 3.2), which selectively can be brought into driving connection with one another via a first coupling device (5), and
1.7 the positive coupling (4) comprises a third and fourth coupling element (4.1, 4.2), which selectively can be brought into driving connection with one another via a second coupling device (6) in order to couple the drive shaft (2.1) and the output shaft (1.1) with one another in a torque-proof manner, and the first mechanical coupling (3) forms the third coupling element (4.1) or is connected to said coupling element;
**characterised by** the following features:
1.8 the additional positive coupling (9) comprises a fifth and sixth coupling element (9.1, 9.2) which can be brought in connection with one another in a non-positive and/or positive locking manner via a third coupling device (10), so that the output shaft (2.1) and the drive shaft (1.1) can be coupled to each other in a torque-proof manner.

2. Machine assembly according to claim 1, **characterised in that** the fifth and sixth coupling element (9.1, 9.2) can be shifted with respect to one another axially together and can be brought into engagement together with the second coupling element (3.2) or the output shaft (2.1) in a non-positive and/or positive locking manner.

3. Machine assembly according to one of claims 1 or 2, **characterised in that** the fifth coupling element (9.1) and the sixth coupling element (9.2) have serrations which are complementary to one another, which can be brought into engagement with one another; and
3.1 the sixth coupling element (9.2) is formed of the second coupling element (3.2) or is connected to such a coupling element.

4. Machine assembly according to one of claims 1 to 3, **characterised in that** the fifth and sixth coupling elements (9.1, 9.2) are mounted axially with respect to the first coupling element (3.1) or to the output shaft (1.1) and can slide along the latter.

5. Machine assembly according to one of claims 1 to 4, **characterised in that** the first coupling element (3.1) has a straight or oblique serration, which meshes with a serration, designed in complement, of the third coupling element (4.1).

6. Machine assembly according to one of claims 1 to 5, **characterised in that** the non-positive coupling (3) is designed to transmit a reduced torque, and the positive coupling (4) to transmit a larger torque; or
6.1 the positive coupling (4) is designed in terms of performance in such a way that it transmits substantially the same torque as the non-positive coupling (3).

## Revendications

1. Machine équipée
1.1 pourvu d'un système d'entraînement (1), comprenant un arbre de sortie (1.1);
1.2 d'un moteur de travail (2) présentant un arbre d'entraînement (2.1)) ;
1.3 d'un embrayage équipé connecté entre le système d'entraînement (1) et le moteur de travail (2), comprenant un embrayage (3) à coopération de forces et un embrayage (4) à coopération de formes ;
1.4 l'embrayage équipé comporte un embrayage supplémentaire (9) à coopération de formes ;
1.5 pourvu d'un commutateur qui est actionné lorsque l'on atteint une vitesse de rotation de consigne ou bien un couple de transmission déterminé entre l'embrayage (3) à coopération de forces et l'embrayage (4) à coopération de formes par le biais de l'embrayage supplémentaire (9) à coopération de formes ;
où
1.6 l'embrayage (3) à coopération de forces comprend un premier et un deuxième élément d'accouplement (3.1, 3.2), qui peuvent être mis en liaison motrice l'un avec l'autre par le biais d'un premier dispositif de synchronisation (5), et
1.7 l'embrayage (4) à coopération de formes comprend un troisième et un quatrième élément d'accouplement (4.1, 4.2) qui peuvent être mis en liaison motrice l'un avec l'autre par le biais d'un deuxième dispositif de synchronisation (6), pour accoupler l'arbre d'entraînement (2.1) et l'arbre de sortie (1.1) de manière solidaire en rotation l'un avec l'autre, et le premier accouplement mécanique (3) constitue le troisième élément d'accouplement (4.1) ou bien est connecté à celui-ci ;
présentant les caractéristiques suivantes:
1.8 l'embrayage supplémentaire (3) à coopération de formes comprend un cinquième et un second sixième élément d'accouplement (9.1, 9.2), qui peuvent être amenés en liaison motrice l'un avec l'autre à coopération de forces et/ou à coopération de formes par le biais d'un troisième dispositif de synchronisation (10),de telle sorte que l'arbre de sortie (2.1) et arbre d'entraînement (1.1) puissent être accouplés de manière solidaire en rotation l'un avec l'autre.

2. Machine équipée selon la revendication 1, **caractérisée en ce que** les cinquième et sixième éléments d'accouplement (9.1, 9.2) puissent être décalés ensemble l'un vers l'autre dans l'axe et s'engrener ensemble à coopération de forces et/ou à coopération de formes avec le deuxième élément d'accouplement (3.2) ou l'arbre de sortie (2.1).

3. Machine équipée selon l'une des revendications 1 ou 2, **caractérisée en ce que** le cinquième élément d'accouplement (9.1) et le sixième élément d'accouplement (9.2) présentent des engrènements frontaux mutuellement complémentaires pouvant se mettre en prise l'un avec l'autre ; et
3.1 le sixième élément d'accouplement (9.2) est constitué du deuxième élément d'accouplement (3.2) ou bien est connecté à celui-ci.

4. Machine équipée selon l'une des revendications 1 à 3, **caractérisée en ce que** les cinquième et sixième éléments d'accouplement (9.1, 9.2) sont montés de façon relative axialement par rapport au premier élément d'accouplement (3.1) ou à l'arbre de sortie (1.1) et sont mobiles le long de ces derniers.

5. Machine équipée selon l'une des revendications 1 à 4, **caractérisée en ce que** le premier élément d'accouplement (3.1) présente une denture droite ou oblique, qui s'engrène dans une denture complémentaire du troisième élément d'accouplement (4.1).

6. Machine équipée selon l'une des revendications 1 à 5, **caractérisée en ce que** l'embrayage (3) à coopération de forces est conçu pour la transmission d'un couple plus petit et que l'embrayage (4) à coopération de formes est conçu pour la transmission d'un couple plus grand ; ou
6.1 l'embrayage (4) à coopération de formes est conçu en termes de performances de telle sorte qu'elle puisse transmettre essentiellement le même couple que l'embrayage (3) à coopération de forces.
